# EUROPÄISCHE PATENTSCHRIFT

(11) **EP 2 547 415 B1**
(45) Veröffentlichungstag und Bekanntmachung des Hinweises auf die Patenterteilung: **03.12.2014**
(21) Anmeldenummer: 11709668.5
(22) Anmeldetag: 08.03.2011
(51) Int. Cl.: B01D 35/153, B01D 36/00

(54) **FILTEREINRICHTUNG**
FILTER APPLIANCE
DISPOSITIF FILTRANT

(30) Priorität: 13.03.2010 DE 102010011290
(43) Veröffentlichungstag der Anmeldung: 23.01.2013
(73) Patentinhaber: Mahle International GmbH, 70376 Stuttgart (DE)
(72) Erfinder: BRAUNHEIM, Michael, 73035 Göppingen (DE)
(74) Vertreter: BRP Renaud & Partner mbB Rechtsanwälte Patentanwälte Steuerberater
(86) Internationale Anmeldenummer: PCT/EP2011/053449
(87) Internationale Veröffentlichungsnummer: WO 2011/113723

(56) Entgegenhaltungen:
- EP-A2- 1 233 173
- DE-A1-102007 009 352
- US-A1- 2005 161 386
- US-A1- 2006 054 547
- US-A1- 2010 025 317

## Beschreibung

Die vorliegende Erfindung betrifft eine Filtereinrichtung mit einem in einem Filtergehäuse angeordneten Ringfilterelement, das eine obere Endscheibe sowie eine untere Endscheibe aufweist, gemäß dem Oberbegriff des Anspruchs 1. Die Erfindung betrifft außerdem ein Ringfilterelement für eine solche Filtereinrichtung.

Eine gattungsgemäße Filtereinrichtung ist aus dem Dokument DE 10 2007 009352 bekannt und in nahezu sämtlichen modernen Kraftfahrzeug zu finden, eingesetzt beispielsweise als Öl- oder Kraftstofffilter.

Um eine einwandfreie Filterwirkung gewährleisten zu können, ist es für die Hersteller von derartigen Filtereinrichtungen oftmals wichtig, dass nur von ihnen selbst autorisierte oder hergestellte Filterelemente eingesetzt werden. Beim Einsatz von Filterelementen fremder Fabrikate oder Imitate können nämlich nicht nur die Filterleistung beeinträchtigt, sondern zugleich auch Schäden verursacht werden. Auf der anderen Seite ist es wünschenswert, Filterelemente für derartige Filtereinrichtungen möglichst kostengünstig herzustellen und anbieten zu können.

Die vorliegende Erfindung beschäftigt sich daher mit dem Problem, für eine Filtereinrichtung der gattungsgemäßen Art, eine verbesserte oder zumindest eine alternative Ausführungsform anzugeben, welche insbesondere ausschließlich den Einsatz von autorisierten Filterelementen ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein an sich bekanntes Ringfilterelement, welches stehend in einem Filtergehäuse einer Filtereinrichtung angeordnet ist, bodenseitig mit einem abstehenden, stutzenförmigen Pin sowie zumindest mit einer Schlüsselkontur zu versehen. Der Pin und die Schlüsselkontur können dabei direkt an der unteren Endscheibe oder an einem daran angeordneten Bauteil, wie beispielsweise einem Wassersammeltopf, angeordnet sein. An einem zugehörigen Funktionselement, oftmals auch Funktionsträger genannt, welches im Einbauzustand im Filtergehäuse der Filtereinrichtung angeordnet ist, sind ein komplementär zum Pin ausgebildeter Kanal sowie eine zu der wenigstens einen Schlüsselkontur gehörende Schlosskontur angeordnet. Eine einwandfreie Betriebsweise der Filtereinrichtung ist erfindungsgemäß ausschließlich dann möglich, sofern das Ringfilterelement in seinem in der Filtereinrichtung eingebauten Zustand mit dem Pin in den Kanal und mittels der Schlüsselkontur in die zugehörige Schlosskontur eingreift. Dies ermöglicht es, die Filtereinrichtung für unterschiedliche Märkte mit jeweils zugehörigen Funktionselementen und darauf abgestimmten Ringfilterelementen auszustatten, so dass im jeweiligen Markt lediglich vorbestimmte Filterelemente in die in dem jeweiligen Markt befindlichen Filtereinrichtungen passend eingesetzt werden können. Ringfilterelemente aus anderen Märkten, die dann eine abweichende Schlüsselkontur aufweisen, können nicht passend in die Filtereinrichtung eingesetzt werden, so dass ein Betrieb der Filtereinrichtung ausschließlich mit dafür bestimmten Ringfilterelementen möglich ist, wodurch insbesondere hohe Qualitätsstandards gewährleistet und gehalten werden können. Insbesondere kann dadurch die Verwendung von unter Umständen die Filterleistung der Filtereinrichtung beeinträchtigenden Ringfilterelementen zuverlässig verhindert werden.

Bei einer vorteilhaften Weiterbildung der erfindungsgemäßen Lösung, ist die Schlüsselkontur durch zwei oder mehr in Umfangsrichtung voneinander beanstandete Nasen gebildet, während die dazu gehörige Schlosskontur durch zwei oder mehr komplementär dazu ausgebildete Schlitze gebildet ist, wobei die Schlitze mittels abbrechbaren Sperrelementen verschlossen sind und durch ein fachmännisches Abbrechen entsprechender Sperrelemente vor der eigentlichen Montage an eine jeweilige Schlüsselkontur angepasst werden können. Generell ist auch denkbar, die Schlosskontur als Schlosselement unabhängig von dem Funktionselement zu fertigen, um dann bei der Montage die Möglichkeit zu haben, den Kanal, das heißt die Pinaufnahme, im Funktionselement und die Schlosselement in unterschiedlichen Positionen so miteinander zu verbinden, dass die gewünschte Schlosskontur entsteht. Hierdurch ist es möglich, das Funktionselement für alle Schlüssel-Schloss-Varianten als Gleichteil auszubilden, wobei zur Anpassung der Schlosskontur an die in dem jeweiligen Markt verwendeten Ringfilterelemente die entsprechenden Sperrelemente zur Freigabe der zugehörigen Schlitze aus- bzw. abgebrochen werden müssen. Die Ausbildung des Funktionselements als Gleichteil ermöglicht eine besonders kostengünstige Herstellung desselben, beispielsweise als Kunststoffspritzgussteil, wobei das Anpassen der Schlosskontur an die jeweils verwendete Schlüsselkontur des Ringfilterelementes einfach möglich ist.

Bei einer vorteilhaften Weiterbildung der erfindungsgemäßen Lösung, ist ein innerhalb des Wassersammeltopfes angeordnete Wasserabscheider als Coalescer ausgebildet und gleichzeitig an die untere Endscheibe des Ringfilterelementes angeschweißt. Ein derartiger Coalescer ist in der Lage, Wasserpartikel zu sammeln und abzuleiten und damit beispielsweise im Kraftstoff vorhandene Wasseranteile herauszufiltern, so dass diese nicht in den Verbrennungsmotor gelangen und dort Korrosionsschäden verursachen können. Die Filtereinrichtung kann in diesem Fall beispielsweise als Öl- oder Kraftstofffilter ausgebildet sein, wobei ganz generell auch eine Ausbildung als Luftfilter denkbar ist. Der Wasserabscheider ist bei einem Kraftstofffilter an die untere Endscheibe des Ringfilterelementes angebunden, insbesondere angeschweißt, und kann dadurch vor der Montage bzw. vor dem Schließen des Wassersammeltopfes exakt positioniert und fixiert werden, was den Herstellungsprozess der erfindungsgemäßen Filtereinrichtung deutlich vereinfacht.

Bei einer weiteren vorteilhaften Ausführungsform der erfindungsgemäßen Lösung ist am Filtergehäusetopf oder an einem darin angeordneten Funktionselement eine Führung vorgesehen, entlang welcher der Pin bei der Montage des Ringfilterelementes zum Kanal geführt wird. Eine derartige Führung kann beispielsweise in der Art einer Rampe ausgebildet sein, welche ein beliebiges Einsetzen des Ringfilterelementes ermöglicht, so dass dieses mittels des Pins entlang der Führung in den Kanal gleitet und dadurch eine stets richtige Montage gewährleistet werden kann. Eine derartige Führung kann zum einen kostengünstig, beispielsweise durch ein geeignetes Spritzgusswerkzeug, realisiert werden und gewährleistet zum anderen ein deutlich vereinfachtes Handling der erfindungsgemäßen Filtereinrichtung, da das Ringfilterelement in einer beliebigen Drehwinkellage in den Filtergehäusetopf eingesetzt werden und durch ein einfaches Verdrehen in seine richtige und korrekte Stellung überführt werden kann. Eine Fehlmontage des Ringfilterelementes kann dadurch zuverlässig ausgeschlossen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Filtereinrichtung bei der Montage eines Ringfilterelementes,
- Fig. 2: eine Darstellung wie in Fig. 1, jedoch in einem Betriebszustand der Filtereinrichtung,
- Fig. 3: ein erfindungsgemäßes Ringfilterelement,
- Fig. 4: unterschiedliche Ansichten auf ein erfindungsgemäßes Funktionselement.

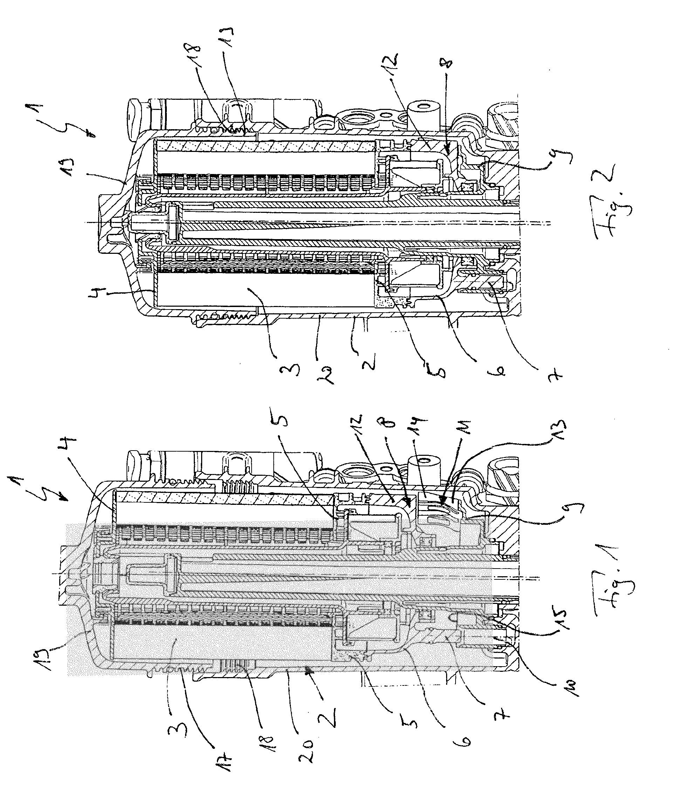

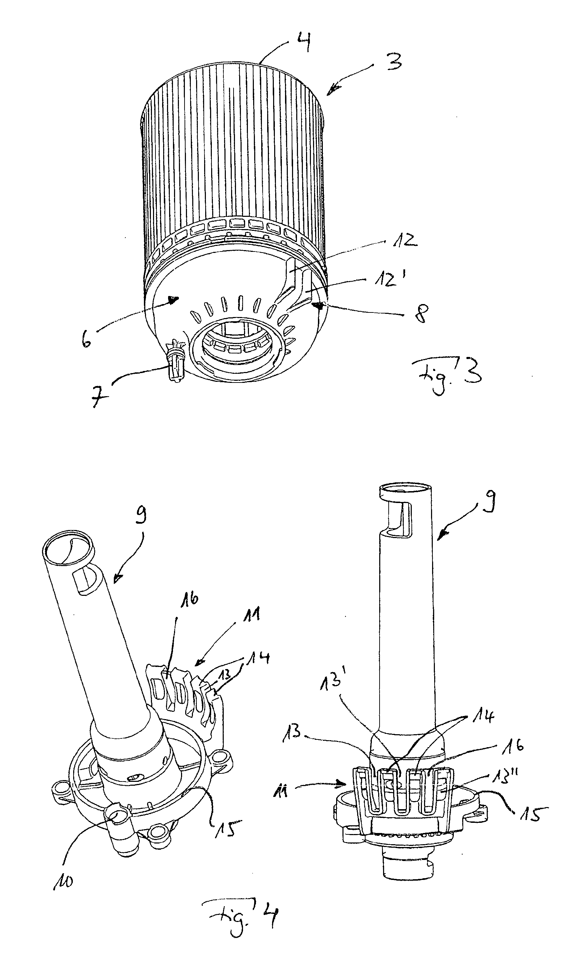

Entsprechend den Fig. 1 und 2, weist eine erfindungsgemäße Filtereinrichtung 1, die beispielsweise als Öl- oder Kraftstofffilter ausgebildet sein kann, ein in einem Filtergehäuse 2 stehend angeordnetes Ringfilterelement 3 auf. Das Ringfilterelement 3 besitzt dabei in bekannter Weise eine obere Endscheibe 4 sowie eine untere Endscheibe 5, wobei an der unteren Endscheibe 5 ein Wassersammeltopf 6 (vgl. Fig. 3) vorgesehen ist. Der Wassersammeltopf ist dabei rein optional angeordnet, so dass ein abstehender, stutzenförmiger Pin 7 sowie zumindest eine Schlüsselkontur 8 entweder direkt an der unteren Endscheibe 5 oder an einem daran angeordneten Bauteil, wie beispielsweise dem Wassersammeltopf 6, angeordnet sein können. In dem optionalen Wassersammeltopf 6 ist üblicherweise ein Wasserabscheider, insbesondere ein sogenannter Coaleszer angeordnet. Darüber hinaus ist in der erfindungsgemäßen Filtereinrichtung 1 ein Funktionselement 9 eingesetzt (vgl. auch Fig. 4), an welchem ein komplementär zu dem Pin 7 ausgebildeter und als Pinaufnahme dienender Kanal 10, ebenso wie eine zu der wenigstens einen Schlüsselkontur 8 passende Schlosskontur 11 vorgesehen sind. Ein einwandfreier Betrieb der Filtereinrichtung 1 ist dabei ausschließlich dann möglich, sofern der Pin 7 in den Kanal 10 und die Schlüsselkontur 8 in die Schlosskontur 11 eingreifen. Durch das Eingreifen des Pins 7 in den Kanal 10 wird letzterer verschlossen und dadurch überhaupt erst ein Druckaufbau in der Filtereinrichtung 1 ermöglicht. Generell kann der Kanal 10 als Leerlaufkanal ausgebildet sein.

Betrachtet man insbesondere die Fig. 3, so kann man erkennen, dass die Schlüsselkontur 8 zwei Nasen 12 und 12' aufweist, während die zugehörige Schlosskontur 11 gemäß der Fig. 4 zwei dazu passende Schlitze 13 und 13' besitzt. Selbstverständlich ist dabei auch lediglich eine einzige Nase 12 zur Verwirklichung des erfindungsgemäßen Schlüsselschloss-Prinzips ausreichend, die in einen an der Schlosskontur 11 zugehörigen Schlitz 13 eingreift. Hierbei kommt es lediglich auf die Umfangsorientierung des Pins 7 und der wenigstens einen Nase 12 an. Generell kann die Schlosskontur 11 kammartig ausgebildet sein, wie dies beispielsweise gemäß der Fig. 4 dargestellt ist, wobei zwischen einzelnen Zinken 14 oben genannte Schlitze 13 und 13' angeordnet sind.

Zusätzlich ist am Funktionselement 9 eine Führung 15 vorgesehen, auf welcher der Pin 7 zum Kanal 10 geführt wird, so dass bei einem Einsetzen des Ringfilterelementes 3 in das Filtergehäuse 2 der Filtereinrichtung 1 ein Ausrichten des Ringfilterelementes 3 in seine Einbauposition automatisch erfolgt. In der Einbauposition fluchten dabei der Pin 7 mit dem zugehörigen Kanal 10 am Funktionselement 9 sowie die Nasen 12, 12' mit den entsprechenden Schlitzen 13, 13' an der Schlosskontur 11.

Um die Herstellung insbesondere des Ringfilterelementes 3 und/oder des Funktionselementes 9 zu erleichtern, können die Schlüsselkontur 8 einstückig mit der Endscheibe 5 bzw. dem Wassersammeltopf 6 und die Schlosskontur 11 einstückig mit dem Funktionselement 9 ausgebildet sein. Da sowohl der Wassersammeltopf 6 als auch das Funktionselement 9 vorzugsweise aus Kunststoff hergestellt, lässt sich die Herstellung der Schlüsselkontur 8 bzw. der Schlosskontur 11 durch ein Einfaches Anspritzen bewerkstelligen. Denkbar ist selbstverständlich auch eine separate Ausbildung.

Um unterschiedliche Märkte mit jeweils zugehörigen Ringfilterelementen 3 ausstatten zu können, kann auch ein Baukastensystem für die Filtereinrichtung 1 vorgesehen sein, bei welchem zumindest zwei Funktionselemente 9 und zwei zugehörige Ringfilterelement 3 mit paarweise unterschiedlichen Schlüssel-/Schlosskonturen 8, 11 versehen sind. Dadurch kann gewährleistet werden, dass im jeweiligen Markt vorzugsweise ausschließlich die dazu gehörenden Ringfilterelemente 3 eingesetzt und dadurch eine hohe Filterleistung erzielt werden können. Zur Unterscheidung der einzelnen Funktionselemente 9 für unterschiedliche Märkte, können einzelne Schlitze, gemäß der Fig. 4 der Schlitz 13", mittels eines entsprechenden Sperrelementes 16 verschlossen sein, wobei durch ein einfaches aber fachmännisch durchzuführendes Abbrechen bzw. Entfernen des jeweiligen Sperrelementes 16 der zugehörige Schlitz 13" freigegeben wird. Gemäß der Fig. 4 ist dabei das Sperrelement 16 nur noch im Bereich des Schlitzes 13" angeordnet und sperrt diesen, so dass eine eventuell hierfür vorgesehene Nase nicht eingeführt und dadurch das Ringfilterelement 3 nicht korrekt in das Filtergehäuse 2 eingesetzt werden kann.

Innerhalb des Wassersammeltopfes 6 ist üblicherweise ein Wasserabscheider, beispielsweise ein Coalescer angeordnet, wobei der Wassersammeltopf 6 beispielsweise an die untere Endscheibe 5 angeschweißt werden kann. Eine derartiger Coalescer ist in der Lage, Wasserpartikel zu sammeln und damit beispielsweise im Kraftstoff vorhandene Wasseranteile herauszufiltern, so dass diese nicht in den Verbrennungsmotor gelangen und dort Korrosionsschäden verursachen können.

Zusätzlich ist vorgesehen und den Fig. 1 und 2 zu entnehmen, dass wenn der Pin 7 nicht in den Kanal 10 eingreift und die Schlüsselkontur 8 nicht in das passende Schloss eingesteckt ist, das Filtergehäuse 2 nicht zugeschraubt werden kann, weil ein Gewinde 17 des Filtergehäusedeckels 19 nicht in ein Gewinde 18 am Filtergehäusetopf 20 eingreifen kann. Erst wenn der Pin 7 und die Schlüsselkontur 8 jeweils in ihrer passenden Gegenkontur, das heißt den Kanal 10 und die Schlosskontur 11, eingeführt sind, kommen die beiden Gewinde 17, 18 in Eingriff und die Filtereinrichtung 1 kann zugeschraubt werden. Dafür muss das Ringfilterelement 3 am Filtergehäusedeckel 19 drehbar und lösbar gelagert sein. Sitzt ein nicht passendes Ringfilterelement 3 im Filtergehäuse 2, so kann die Filtereinrichtung 1 nicht geschlossen werden, so dass mit dem Einschalten des Motors Sensoren die nicht vorhandenen Drücke messen können und eine Fehlermeldung ausgeben, z.B. an den Fahrer. Im Fall von Kraftstoff ist es natürlich möglichst zu verhindern, dass ein Kraftfahrzeug mit offener Filtereinrichtung 1 gestartet wird. Dies kann bei Bedarf durch entsprechende Einrichtungen z.B. Sensoren erreicht werden. Es können beispielsweise der Pin 7 und der Kanal 10 oder die Schlüssel-Schloss-Kontur ein Sensorsystem enthalten das einer Motorelektronik mitteilt, ob das Ringfilterelement 3 eingebaut wurde und ob es sich in einer funktionell richtigen Lage befindet. Solche Sensorsysteme können induktiv oder per Funk arbeiten, z.B. mittels RFID oder Reed-Kontakt oder Hall-Sensor.

Selbstverständlich ist auch ein Umkehrschluss dahingehend denkbar, dass die Schlüsselkontur 8 am Funktionselement 9 und die dazu passend Schlosskontur 11 am Ringfilterelement 3, das insbesondere an dessen Wassersammeltopf 6, angeordnet sind.

Alternativ kann die Schlüssel-Schloss-Kontur kann auch auf einer unzugänglichen Innenseite, z.B. an einer Innenzarge, des Ringfilterelements 3 und dem passenden Funktionselement 9 bzw. Dom des Filtergehäuses 2 angeordnet sein. Bei einem Ölfilter beispielweise ist der Pin 7 vorzugsweise an der unteren Endscheibe 5 angeformt. An der Innenseite der Endscheibe 5 oder an der an die Endscheibe 5 anschließenden Innenzarge können Vorsprünge angeordnet sein, die in Öffnungen oder Vertiefungen des Funktionselements 9 eingreifen. Diese Anordnung hätte den Vorteil dass die Schlüssel-Schloss-Konturen weniger anfällig für Missbrauch sind. Dies ließe sich eventuell auch auf der Innenseite des Wassersammeltopfes 6 eines Kraftstofffilters realisieren.

## Patentansprüche

1. Filtereinrichtung (1) mit einem in einem Filtergehäuse (2) vorzugsweise stehend angeordneten Ringfilterelement (3), das eine obere Endscheibe (4) und eine untere Endscheibe (5) aufweist,
**dadurch gekennzeichnet, dass**
- an der unteren Endscheibe (5) direkt oder indirekt an einem daran angeordneten Bauteil, wie beispielsweise einem Wassersammeltopf (6), ein abstehender, stutzenförmiger Pin (7) sowie zumindest eine Schlüsselkontur (8) angeordnet sind,
- an einem in einen Filtergehäusetopf (20) der Filtereinrichtung (1) einsetzbaren Funktionselement (9) ein komplementär zu dem Pin (7) ausgebildeter Kanal (10) vorgesehen ist,
- am Funktionselement (9) eine zu der wenigstens einen Schlüsselkontur (8) gehörende Schlosskontur (11) vorgesehen ist,
- dass ein Betrieb der Filtereinrichtung (1) ausschließlich dann möglich ist, sofern der Pin (7) in den Kanal (10) und die Schlüsselkontur (8) in die Schlosskontur (11) eingreifen.

2. Filtereinrichtung nach Anspruch 1,
**dadurch gekennzeichnet,**
**dass** die Schlüsselkontur (8) durch zumindest eine Nase (12) gebildet ist, während die Schlosskontur (11) durch zumindest einen komplementär dazu ausgebildeten Schlitz (13) gebildet ist.

3. Filtereinrichtung nach Anspruch 1 oder 2,
**dadurch gekennzeichnet,**
**dass** die Schlüsselkontur (8) durch zwei oder mehr in Umfangsrichtung voneinander beabstandete Nasen (12,12') gebildet ist, während die Schlosskontur (11) durch zwei oder mehr komplementär dazu ausgebildete Schlitze (13,13') gebildet ist.

4. Filtereinrichtung nach einem der Ansprüche 1 bis 3,
**dadurch gekennzeichnet,**
**dass** die Schlosskontur (11) kammartig ausgebildet ist, wobei zwischen einzelnen Zinken (14) die zur Aufnahme der Nase(n) (12,12') angeordneten Schlitze (13,13') vorgesehen sind.

5. Filtereinrichtung nach einem der Ansprüche 1 bis 4,
**dadurch gekennzeichnet,**
**dass** die Filtereinrichtung (1) als Öl- oder als Kraftstofffilter ausgebildet ist.

6. Filtereinrichtung nach einem der Ansprüche 1 bis 5,
**dadurch gekennzeichnet,**
**dass** an dem Funktionselement (9) eine Führung (15) vorgesehen ist, welche den Pin (7) zum Kanal (10) führt.

7. Filtereinrichtung nach einem der Ansprüche 3 bis 6,
**dadurch gekennzeichnet,**
**dass** das Funktionselement (9) als Gleichteil ausgebildet ist, wobei zumindest ein Schlitz (13") mittels Sperrelementes (16) verschlossen ist und durch Ab-/Ausbrechen an eine jeweilige Schlüsselkontur (8) anpassbar ist.

8. Filtereinrichtung nach einem der Ansprüche 1 bis 7,
**dadurch gekennzeichnet,**
**dass** die Schlüsselkontur (8) einstückig mit dem Wassersammeltopf (6) und/oder die Schlosskontur (11) einstückig mit dem Funktionselement (9) ausgebildet sind.

9. Filtereinrichtung nach einem der Ansprüche 1 bis 8,
**dadurch gekennzeichnet**,
das sich die Schlüsselkontur (8) unzugänglich von außen innerhalb des oder am Ringfilterelement (3) und die Schlosskontur (11) an der dazu abgestimmten Positionen des Funktionselementes (9) befindet.

10. Ringfilterelement (3) für eine Filtereinrichtung (1) nach einem der Ansprüche 1 bis 9,
**dadurch gekennzeichnet, dass**
- an der unteren Endscheibe (5) ein Wassersammeltopf (6) mit einem darin angeordneten Wasserabscheider vorgesehen ist,
- der Wassersammeltopf (6) einen abstehenden, stutzenförmigen Pin (7) sowie zumindest eine Schlüsselkontur (8) aufweist.

## Claims

1. A filter appliance (1) with a ring filter element (3) preferentially arranged upright in a filter housing (2), which comprises an upper end disc (4) and a lower end disc (5),
**characterized in that**
- on the lower end disc (5) directly or indirectly on a component arranged thereon, such as for example a water collection pot (6), a projecting, nipple-shaped pin (7) and at least one key profile (8) are arranged,
- on a function element (9) that can be inserted in a filter housing pot (20) of the filter appliance (1), a channel (10) provided complementarily to the pin (7) is provided,
- on the function element (9) a lock profile (11) belonging to the at least one key profile (8) is provided,
- an operation of the filter appliance (1) is exclusively possible provided the pin (7) engages in the channel (10) and the key profile (8) engages in the lock profile (11).

2. The filter appliance according to Claim 1, **characterized in that** the key profile (8) is formed by at least one nose (12), while the lock profile (11) is formed by at least one slit (13) formed complementarily thereto.

3. The filter appliance according to Claim 1 or 2, **characterized in that** the key profile (8) is formed through two or more noses (12, 12') spaced from one another in circumferential direction, while the lock profile (11) is formed by two or more slits (13, 13') formed complementarily thereto.

4. The filter appliance according to any one of the Claims 1 to 3, **characterized in that** the lock profile (11) is formed comb-like, wherein between individual teeth (14) the slits (13, 13') arranged for receiving the nose(s) (12, 12') are provided.

5. The filter appliance according to any one of the Claims 1 to 4, **characterized in that** the filter device (1) is embodied as oil or fuel filter.

6. The filter appliance according to any one of the Claims 1 to 5, **characterized in that** on the function element (9) a guide (15) is provided, which guides the pin (7) to the channel (10).

7. The filter appliance according to any one of the Claims 3 to 6, **characterized in that** the function element (9) is formed as identical part, wherein at least one slit (13") is closed off by means of a blocking elements (16) and can be matched to a respective key profile (8) through breaking off/out.

8. The filter appliance according to any one of the Claims 1 to 7, **characterized in that** the key profile (8) is formed unitarily with the water collection pot (6) and/or the lock profile (11) is formed unitarily with the function element (9).

9. The filter appliance according to any one of the Claims 1 to 8, **characterized in that** the key profile (8) is located inaccessible from the outside within the or on the ring filter element (3) and the lock profile on the positions of the function element (9) matched thereto.

10. A ring filter element (3) for a filter appliance (1) according to any one of the Claims 1 to 9,
**characterized in that**
- on the lower end disc (5) a water collection pot (6) with a water separator arranged therein is provided,
- the water collection pot (6) has a projecting, nipple-shaped pin (7) and at least one key profile (8).

## Revendications

1. Dispositif de filtre (1) comportant un élément de filtre annulaire (3) disposé dans un logement de filtre (2), de préférence à la verticale, qui présente une rondelle d'extrémité supérieure (4) et une rondelle d'extrémité inférieure (5),
**caractérisé en ce que**
- sur la rondelle d'extrémité inférieure (5) directement ou indirectement sur un composant disposé sur celle-ci, comme par exemple un pot d'accumulation d'eau (6), sont disposés une goupille (7) faisant saillie en forme d'embout ainsi qu'au moins un contour de clé (8),
- sur un élément fonctionnel (9) pouvant être inséré dans un pot de logements de filtre (20) du dispositif de filtre (1), un canal (10) réalisé complémentairement à la goupille (7) est prévu,
- sur l'élément fonctionnel (9) un contour de serrure (11) appartenant à au moins un contour de clé (8) est prévu,
- un fonctionnement du dispositif de filtre (1) est donc exclusivement possible, dans la mesure où la goupille (7) s'engage dans le canal (10) et le contour de clé (8) s'engage dans le contour de serrure (11).

2. Dispositif de filtre selon la revendication 1,
**caractérisée en ce que**
le contour de clé (8) est formé par au moins un nez (12), alors que le contour de serrure (11) est formé par au moins une fente (13) de configuration complémentaire à celle-ci.

3. Dispositif de filtre selon la revendication 1 ou 2,
**caractérisé en ce que**
le contour de clé (8) est formé par deux ou plusieurs nez (12, 12') espacées les uns des autres dans la direction circonférentielle, alors que le contour de serrure (11) est formé par deux ou plusieurs fentes (13, 13') de configuration complémentaire.

4. Dispositif de filtre selon une des revendications 1 à 3,
**caractérisée en ce que**
le contour de serrure (11) est réalisé en forme de peigne, dans lequel entre les dents individuelles (14) sont prévues les fentes (13, 13') disposées pour recevoir le ou les nez (12, 12').

5. Dispositif de filtre selon une des revendications 1 à 4,
**caractérisée en ce que**
le dispositif de filtre (1) est conçu comme un filtre à huile ou à carburant.

6. Dispositif de filtre selon une des revendications 1 à 5,
**caractérisée en ce que**
sur l'élément fonctionnel (9) une coulisse de guidage (15) est prévue, qui guide la goupille (7) vers le canal (10).

7. Dispositif de filtre selon une des revendications 3 à 6,
**caractérisée en ce que**
l'élément fonctionnel (9) est conçu comme une pièce identique, dans lequel au moins une fente (13") est obturée au moyen d'un élément de blocage (16) et peut-être adaptée à un contour de clé respectif (8) par rupture/éclatement.

8. Dispositif de filtre selon une des revendications 1 à 7,
**caractérisée en ce que**
le contour de clé (8) est conçu en un seul tenant avec le pot d'accumulation d'eau (6) et/ou le contour de serrure (11) est conçu en un seul tenant avec l'élément fonctionnel (9).

9. Dispositif de filtre selon une des revendications 1 à 8,
**caractérisée en ce que**
le contour de clé (8) se trouve inaccessible de l'extérieur à l'intérieur du ou sur l'élément de filtre annulaire (3) et le contour de serrure (11) se trouve aux positions harmonisées à celui-ci de l'élément fonctionnel (9).

10. Élément de filtre annulaire (3) pour un dispositif de filtre (1) selon une des revendications 1 à 9,
**caractérisé en ce que**
- sur la rondelle d'extrémité inférieure (5), un pot d'accumulation d'eau (6) comportant un séparateur d'eau disposé à l'intérieur est prévu,
- le pot d'accumulation d'eau (6) présente une goupille (7) en forme d'embout faisant saillie ainsi qu'au moins un contour de clé (8).
